# EUROPEAN PATENT SPECIFICATION

(11) **EP 2 842 993 B1**
(45) Date of publication and mention of the grant of the patent: **27.07.2016**
(21) Application number: 14170404.9
(22) Date of filing: 28.05.2014
(51) Int. Cl.: C08K 3/08, C08L 33/12, C08K 3/00, C08J 5/18, C08F 2/44, C08F 265/06

(54) **Method of producing an acrylic material**
Verfahren zur Herstellung eines Acrylmaterials
Procédé de production d'un matériau acrylique

(30) Priority: 28.05.2013 GB 201309495
(43) Date of publication of application: 04.03.2015
(73) Proprietor: Polycasa Limited, Derrylin County, Fermanagh BT92 9AU (GB)
(72) Inventor: Sanchez Cadena, Agnes, 08110 Montcada i Reixac Barcelona (ES); Galvan Zaragoza, Susana, 08110 Montcada i Reixac Barcelona (ES)
(74) Representative: Gernet, Samuel Andreas

(56) References cited:
- US-A1- 2012 112 219

## Description

### FIELD OF THE INVENTION

The present invention relates to a method of producing acrylic material, and to acrylic material produced by the method. More particularly, but not exclusively, the present invention relates to a method of producing acrylic material having reflective particles provided therein.

### BACKGROUND OF THE INVENTION

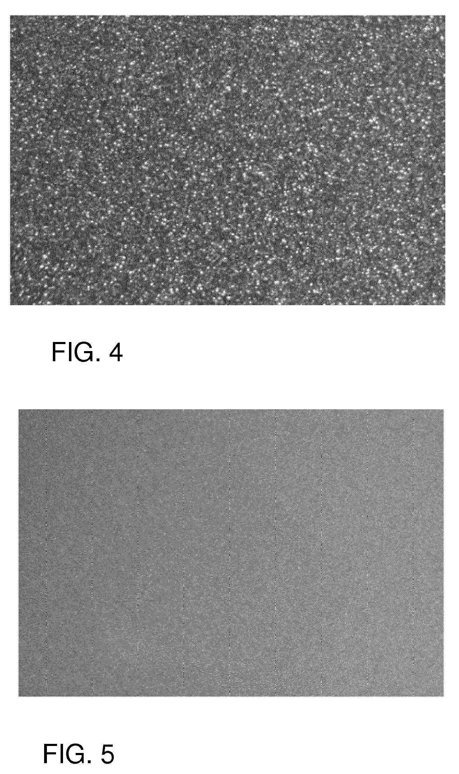

It is known to introduce glitter powder into acrylic material in order to produce decorative sparkling reflective effects. However, the effects so produced are relatively coarse, as can be seen in Figure 4 and the effect is substantially isotropic. An example of such a product is Perspex^{RTM} Sparkle from Lucite International of Lancashire, UK.

The present invention seeks to overcome or at least mitigate the problems of the prior art.

### SUMMARY OF THE INVENTION

A first aspect of the invention provides a method of producing a polymer sheet material comprising the steps of:
a. mixing a composition of material comprising 0.5-2% by weight of metallic flakes having a maximum dimension in a range from 20-300µm and dispersed in a plasticiser, a radical initiator, with the balance being an acrylic prepolymer of Poly(methyl methacrylate) and methyl methacrylate for the production of a transparent polymer in a vessel to produce a viscous material with a viscosity of 120-300cP;
b. introducing the viscous material into a mould;
c. permitting the composition to polymerise under controlled conditions so the concentration of the flakes increases through the thickness of the sheet wherein the controlled conditions include a temperature in the range of 45°C to 60°C;
d. removing the polymerised material from the mould.

This method produces a sheet having high gloss and colour deepness. At the same time the sheet can be thermoformed easily. In addition the sheet has a sparkly appearance on one face, and a silver metallic appearance on the other side. The viscosity range has been found to enable the appropriate rate of settlement of flakes to be achieved during subsequent polymerisation.

The metallic flakes may be aluminium flakes, which have been found to be particularly successful in achieving this effect without degrading the material properties appreciably.

The prepolymer optionally comprises 6-20% by weight of PMMA in MMA, which has been found to have appropriate viscosity levels and result in a finished sheet having suitable properties.

The plasticiser may be selected from at least one of mineral oil, long chain esters of organic acids e.g. acetic acid or phtalic acid and esters of phosphoric acid.

The composition may further comprise one or more of suitable releasing agents, flame retardants and cross-linking agents.

The composition can additionally comprise UV stabilisers, for example benzotriazole or hindered amine light stabilisers.

The composition can further include up to 8% by weight of a co-monomer, for example acrylic or methacrylic esters. This may be included to reduce material stiffness and improve laser cutting optical appearance.

The composition may further comprise 0.001-0.1% by weight of soluble dye, in order to alter the colour thereof, in particular the colour of the side having a sparkly appearance.

The radical initiator may be 0.02%-0.5% by weight of the composition

In step a) the mixing preferably occurs under vacuum, as this has been found to minimise interfering with the polymerization rate and to minimise the surface defects after polymerisation.

In step a) the mixing preferably occurs by stirring at a rate of 30-40rpm to minimise entrainment of air.

In a further step e) between steps a) and b) the material may be passed through a 400µm filter to remove contaminants.

In step b) the material may introduced into the mould under pressure, preferably under gas pressure, for example nitrogen pressure. This helps ensure that settling of the flakes does not occur prematurely.

Preferably, pressure is reduced or removed towards the end of pouring of a batch of material if the process is a batch process to minimise the risk of bubble formation during subsequent polymerisation.

In one embodiment the mould is a cell cast mould. Alternatively, the mould is a continuous cast mould.

In step c) preferably the temperature is around 50°C, as this has been found to result in effective polymerisation.

The material removed from the mould has a thickness in the range of 2mm to 6mm, preferably 3mm to 5mm. Within these ranges, a suitable amount of settlement has been found to occur.

The method may have a further step f) after step c) of curing the polymerised material at an elevated temperature to reduce free MMA captured into material structure and to improve mechanical properties of the end product.

The temperature at step f) is preferably in the range of 50°C to 130°C.

The curing period at step f) is optionally in the range of 1-10 hours, preferably 3-8 hours, more preferably 5-7 hours.

The process may further comprise a step g) after step d) of thermoforming the sheet. After thermoforming the sheet has a "degrade effect" in that it becomes translucent allowing light to get through the material.

Thermoforming is optionally carried out with the material at a temperature of 140°C to 190°C, for example about 175°C.

The temperature of the mould used for thermoforming is optionally in the range of 60° to 85°C.

Polymerisation preferably occurs at a suitable rate so as to enable a substantially uninterrupted layer of flakes to be deposited, but a distribution of flakes to remain at varying depths within the sheet such that the first major face of the sheet has a sparkle appearance and the second major face has a metallic appearance. The metallic appearance may be achieved by the flakes in the layer adopting a similar orientation.

A further aspect of the invention provides a cast polymeric sheet having first and second major faces, the sheet being formed of transparent polymer having 0.5-2% by weight of metallic flakes having a maximum dimension in a range from 20-300µm unevenly distributed therein, wherein concentration of the flakes increases progressively through the thickness of the sheet, such that the first major face of the sheet has a sparkle appearance and the second major face has a metallic appearance. The polymer is Poly(methyl methacrylate).

In certain applications this may avoid the need for additional processes being required to achieve a desired appearance. For example in point of sale displays etc. it has hitherto been necessary to apply an additional layer, such as a vinyl film to one face of glitter acrylic in order to obscure a non-desired glitter appearance on one face. The metallic flakes are preferably aluminium flakes.

The sheet preferably has a thickness of 2mm to 6mm, more preferably 3mm to 5mm.

The sheet may be formed to a non-planar predetermined shape.

The formed sheet may be at least partially translucent.

### BRIEF DESCRIPTION OF THE DRAWINGS

Embodiments of the invention will now be described with reference to the accompanying drawings, in which:
Figure 1 is a flowchart illustrating steps of the process of one aspect of the present invention;
Figure 2 is a simplified diagram of the apparatus used in the process if Figure 1;
Figure 3 is a simplified cross-section through a sheet of material produced by the process of Figure 1;
Figure 4 is an image of a portion of a sheet of the prior art; and
Figure 5 is an image of a portion of a sheet of an embodiment of the present invention.

### DETAILED DESCRIPTION OF EMBODIMENT(S)

With reference to the Figures, the present invention relates, broadly, to method of producing a polymer sheet material that has steps including mixing a composition of material comprising metallic flakes that have dimensions in a range from around 20-300µm, a radical initiator, and prepolymer for the production of a transparent polymer; introducing the viscous material into a mould where it polymerises under controlled conditions that enable the flakes to settle to a predetermined extent, to result in a sheet having different visual properties on its opposite major faces

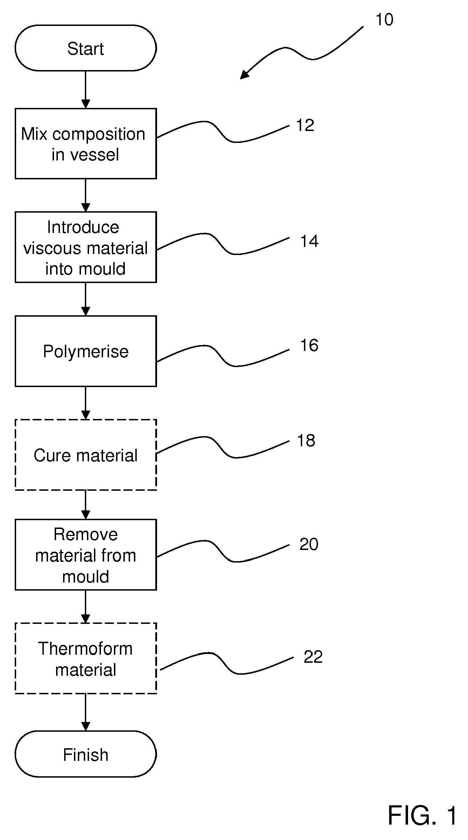

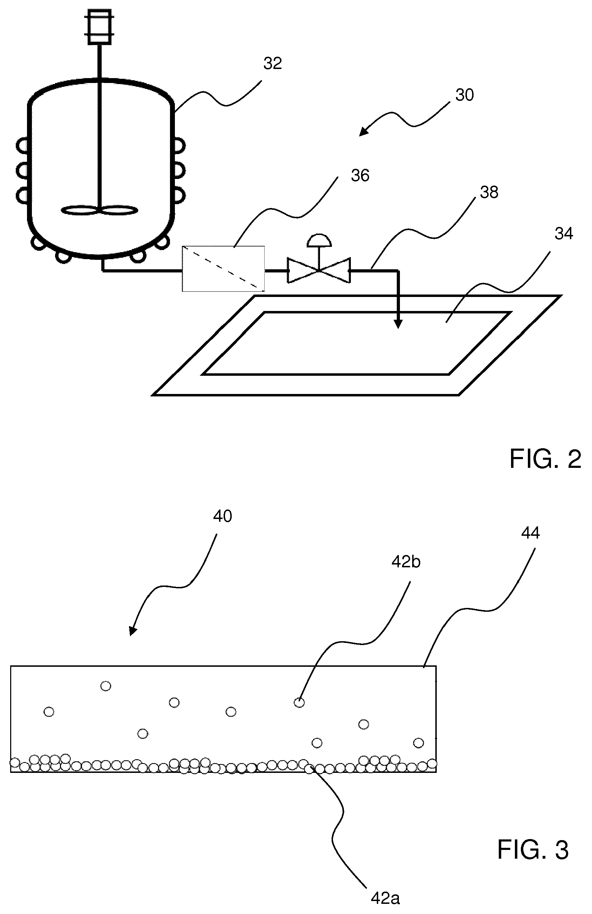

In more detail, referring to Figures 1 and 2, in preferred embodiments of the process 10, at step 12 a composition containing:
- 90-98% of a prepolymer (6-20% weight of Poly(methyl methacrylate) in methyl methacrylate in this embodiment);
- 0.5-2% weight of aluminium flakes ranged in maximum dimension from 20-300 microns dispersed in a plasticiser (suitable plasticisers include families including: mineral oil, and/or long chain esters of organic acids such as like acetic acid or phtalic acid or esters of phosphoric acid); and
- 0.02-0.5% of radical initiator (such as diazo compounds or peroxides);
is mixed together in a vessel 32 of a production apparatus 30 and homogenised.

Further additives may be additionally provided to modify the material properties such as:
- 0.001-0.1% soluble dyes;
- releasing agents;
- UV stabilisers such as benzotriazole or hindered amine light stabilisers (HALS);
- up to 8% of a co-monomer (acrylic or methacrylic esters);
- flame retardants; and
- cross-linking agents.

Manufacturing in this embodiment is carried out in a batch process.

Gases are preferably removed by vacuum during the mixing process in vessel 32 to avoid interfering with the polymerization rate and to minimise the surface defects after polymerisation.

The material is mixed continuously to avoid deposition of the aluminium flakes. The mixture speed is preferred to be between 30-40rpm to avoid air becoming entrained in the material again. The final viscosity of the material is typically between 120-300 cP.

Once a homogenous material having the above viscosity is achieved, at step 14 the material is transferred into one or more moulds 34 using pipework 38 or in other embodiments a funnel. In this embodiment, the mould 34 is a cell cast mould.

A 400µm filter 36 is used to retain ambient contamination.

In order to speed up the mould filling process, an inert gas such as nitrogen is used to pressurise the vessel. The filling process should be carried out as rapidly as practical to minimise the risks of colour defects or non-homogeneous distribution of the colour. However the last sheet of the batch is advantageously moulded without pressure to avoid over-pressure and bubble formation after the polymerisation process.

Once the mould(s) 34 are filled and closed at step 16 they follow a temperature cycle which will depend on thickness and precise composition of the material to allow the material to polymerise at a suitable rate to allow for the desired distribution of aluminium particles to be achieved. The temperature cycle may be carried out in a water bath or in a suitable oven. The temperature range for polymerisation depends on the particular initiators used. However a usual temperature range is between 50°C and 60°C. Residence time and temperature rates are related to final sheet thickness.

After polymerisation a curing process is preferred at step 18 to reduce free MMA captured into material structure, and to improve mechanical properties of the end product. This is typically carried out in the mould 34, the curing process being in an oven and temperatures ranged from 50 to 130°C.

As an illustrative example of polymerisation and curing, a sheet of 3mm thickness can be polymerised at a temperature of 55°C and subsequently curing at 125°C for no longer than 6 hours in total.

As illustrated in Figure 3, these process conditions are varied to assure the desired distribution of the flakes 42a, 42b within the polymerised PMMA 44 of a sheet 40. It can be seen that a substantially continuous layer of flakes 42a is deposited under gravity proximate a lower major face of the sheet 40, but there is a gradient of decreasing concentration of flakes 42b towards an upper major face of the sheet 40 thickness direction.

Essentially the polymerisation rate needs to be such that for a given viscosity of the prepolymer mixture, size of flakes, concentration of flakes, and thickness of mould, the rate of settlement of flakes under gravity would be such that layer of flakes 42a will have settled proximate one face, but the distribution of flakes 42a within the PMMA 44 remains at the point at which the polymerisation reaction increases viscosity to the point at which further settlement or deposition is prevented.

This uneven distribution results in a sheet 40 with faces having a distinctly different appearance after removal from the mould at step 20: the upper surface results in a sparkling appearance (see Figure 5), whereas the lower surface has a silver metallic appearance. The sparkling appearance is caused by varied orientations of the flakes 42b coupled with their varying depth reflecting light at different angles and depths. The silver metallic appearance is caused by the greater alignment on the flakes 42a and their substantially uninterrupted layer.

It will be further appreciated that a sheet of the present invention is opaque in view of the layer of flakes 42a, and further that the sparkle effect is more refined that that of the prior art (as can be seen by comparing Figures 4 and 5) in view of the smaller particle size of the flakes.

If dyes are also used in the composition, then it is also possible to change the apparent colour of the sparkle effect due to the depth of coloured PMMA, but still retain the silver metallic lower face as there is insufficient depth of coloured PMMA beneath the layer of flakes 42a to affect their perceived colour.

In an optional further step of the process, the sheet 40 may be thermoformed at step 22. The addition of the flakes at the concentrations discussed above does not appreciably affect the ability of the sheet to be thermoformed, compared to standard PMMA sheet. Thermoforming may increase light transmittance from fully opaque up to a light transmission of around 50%, depending upon the thinning of material.

The average forming temperature varies between 140° and 190°C (depending on the heating equipment, the type of material, and the degree of forming and material thickness). An average value of the forming temperature is about 175°C. The mould temperature should be approx 60° to 85°C. After thermoforming, the cooling procedure should be slow and uniform.

There are a number of different thermoforming techniques that can be used to form cast acrylic sheet, once heated, into the shape of a mould by mechanical, air pressure, or vacuum forces. Both male (plug) and female (cavity) moulds are used. Forming processes include straight vacuum, drape, matched mould, pressure-bubble plug-assist, plug-assist pressure, vacuum snap-back, pressure-bubble vacuum snap-back, trapped-sheet contact-pressure, free, and mechanical. The best results are typically achieved if a homogeneous temperature in the sheet is achieved when heating.

Sheet material and formed sheet according to the present invention has a number of possible uses including: decoration/interior design, shop fittings/point of sale display, sanitaryware, lighting, skydomes and skylights, for example.

Although the invention has been described above with reference to one or more preferred embodiments, it will be appreciated that various changes or modifications may be made without departing from the scope of the invention as defined in the appended claims.

For example the sheets may be cast in a continuous cast process, and/or the material composition may be mixed in a continuous mixing process. Alternative metallic flakes may be used, such as iron or stainless steel flakes.

## Claims

1. A method of producing an acrylic polymer sheet material comprising the steps of:
a. mixing a composition of material comprising 0.5-2% by weight of metallic flakes having a maximum dimension in a range from 20-300µm and dispersed in a plasticiser, a radical initiator, with the balance being an acrylic prepolymer of Poly(methyl methacrylate) and methyl methacrylate for the production of a transparent polymer in a vessel to produce a viscous material with a viscosity of 120-300cP;
b. introducing the viscous material into a mould;
c. permitting the composition to polymerise under controlled conditions so the concentration of the flakes increases through the thickness of the sheet wherein the controlled conditions include a temperature in the range of 45°C to 60°C;
d. removing the polymerised material from the mould.

2. A method according to claim 1 wherein the prepolymer comprises 6-20% by weight of PMMA in MMA.

3. A method according to any preceding claim wherein the composition further comprises 0.001-0.1% by weight of soluble dye.

4. A method according to any preceding claim wherein the radical initiator is provided in a range of 0.02%-0.5% by weight of the composition.

5. A method according to any preceding claim wherein in step a) the mixing occurs under vacuum.

6. A method according to any preceding claim wherein in step b) the material is introduced into the mould under pressure, preferably wherein the process is a batch process and pressure is reduced or removed towards the end of pouring of a batch of material.

7. A method according to any preceding claim wherein in step c) the temperature is around 50°C.

8. A method according to claim 1 comprising a further step f) after step c) of curing the polymerised material at an elevated temperature, preferably wherein the temperature at step f) is in the range of 50°C to 130°C.

9. A method according to claim 8 wherein the curing period at step f) is in the range of 1-10 hours, preferably 3-8 hours, more preferably 5-7 hours.

10. A method according to any preceding claim wherein polymerisation occurs at a suitable rate so as to enable a substantially uninterrupted layer of flakes to be deposited, but a distribution of flakes to remain at varying depths within the sheet such that the first major face of the sheet has a sparkle appearance and the second major face has a metallic appearance.

11. A cast polymeric sheet having first and second major faces, the sheet being formed of transparent polymer having 0.5-2% by weight of metallic flakes having a maximum dimension in a range from 20-300µm unevenly distributed therein, wherein concentration of the flakes increases through the thickness of the sheet, such that the first major face of the sheet has a sparkle appearance and the second major face has a metallic appearance, wherein the polymer is Poly(methyl methacrylate).

12. A method according to any one of claims 1 to 10 or a cast polymeric sheet according to claim 11 wherein the metallic flakes are aluminium flakes.

13. A method according to any one of claims 1 to 10 or a cast polymeric sheet according to any one of claims 11 to 12 wherein the polymerised material or sheet has a thickness of 2mm to 6mm, preferably wherein the polymerised material or sheet has a thickness of 3mm to 5mm.

## Patentansprüche

1. Verfahren zur Herstellung eines Acrylpolymerplattenmaterials, umfassend die Schritte des:
a. Mischens einer Zusammensetzung von Material umfassend 0,5-2 Gew.-% Metallflocken, die eine maximale Dimension im Bereich von 20-300 µm aufweisen und in einem Weichmacher dispergiert sind, einen Radikalinitiator, wobei der Rest ein Acrylprepolymer von Poly(methylmethacrylat) ist, und Methylmethacrylat, für die Herstellung eines transparenten Polymers in einem Gefäß, um ein viskoses Material mit einer Viskosität von 120-300 cP herzustellen;
b. Einführens des viskosen Materials in eine Form;
c. Gestattens, dass die Zusammensetzung sich unter kontrollierten Bedingungen polymerisiert, so dass die Konzentration der Flocken durch die Dicke der Platte hindurch steigt, wobei die kontrollierten Bedingungen eine Temperatur im Bereich von 45 °C bis 60 °C umfassen;
d. Entfernens des polymerisierten Materials aus der Form.

2. Verfahren nach Anspruch 1, wobei das Prepolymer 6 - 20 Gew.-% PMMA in MMA umfasst.

3. Verfahren nach irgendeinem vorhergehenden Anspruch, wobei die Zusammensetzung ferner 0,001 - 0,1 Gew.-% löslichen Farbstoff umfasst.

4. Verfahren nach irgendeinem vorhergehenden Anspruch, wobei der Radikalinitiator in einem Bereich von 0,02 - 0,5 Gew.-% der Zusammensetzung bereitgestellt wird.

5. Verfahren nach irgendeinem vorhergehenden Anspruch, wobei in Schritt a) das Mischen unter Vakuum erfolgt.

6. Verfahren nach irgendeinem vorhergehenden Anspruch, wobei in Schritt b) das Material in die Form unter Druck eingeführt wird, wobei bevorzugt das Verfahren ein Chargenverfahren ist und der Druck auf das Ende des Gießen einer Charge von Material zu reduziert oder entfernt wird.

7. Verfahren nach irgendeinem vorhergehenden Anspruch, wobei in Schritt c) die Temperatur etwa 50 °C beträgt.

8. Verfahren nach Anspruch 1, umfassend einen weiteren Schritt f) nach Schritt c) des Aushärtens des polymerisierten Materials bei erhöhter Temperatur, wobei die Temperatur in Schritt f) bevorzugt im Bereich von 50 °C bis 130 °C liegt.

9. Verfahren nach Anspruch 8, wobei die Aushärtungszeit in Schritt f) im Bereich von 1 - 10 Stunden, bevorzugt 3 - 8 Stunden, noch bevorzugter 5 - 7 Stunden liegt.

10. Verfahren nach irgendeinem vorhergehenden Anspruch, wobei die Polymerisation mit einer geeigneten Geschwindigkeit erfolgt, um zu ermöglichen, dass eine im Wesentlichen ununterbrochene Schicht von Flocken abgesetzt wird, eine Verteilung von Flocken jedoch in verschiedenen Tiefen innerhalb der Platte bleibt, derart, dass die erste Hauptfläche der Platte ein funkelndes Aussehen aufweist und die zweite Hauptfläche ein metallisches Aussehen aufweist.

11. Gegossene Polymere Platte, die erste und zweite Hauptflächen aufweist, wobei die Platte aus transparentem Polymer gebildet ist, das 0,5 - 2 Gew.-% Metallflocken aufweist, die eine maximale Dimension im Bereich von 20-300 µm aufweisen und ungleichmäßig darin verteilt sind, wobei die Konzentration der Flocken durch die Dicke der Platte hindurch zunimmt, derart, dass die erste Hauptfläche der Platte ein funkelndes Aussehen aufweist und die zweite Hauptfläche ein metallisches Aussehen aufweist, wobei das Polymer Poly(methylmethacrylat) ist.

12. Verfahren nach einem der Ansprüche 1 bis 10 oder gegossene Polymere Platte nach Anspruch 11, wobei die Metallflocken Aluminiumflocken sind.

13. Verfahren nach einem der Ansprüche 1 bis 10 oder gegossene polymere Platte nach einem der Ansprüche 11 bis 12, wobei das polymerisierte Material oder die Platte eine Dicke von 2 mm bis 6 mm aufweist, wobei bevorzugt das polymerisierte Material oder die Platte eine Dicke von 3 mm bis 5 mm aufweisen.

## Revendications

1. Procédé de production d'un matériau de feuille polymère acrylique comprenant les étapes consistant :
a. à mélanger une composition de matériau comprenant 0,5-2 % en masse de flocons métalliques présentant une dimension maximum dans un intervalle de 20-300 µm et dispersés dans un plastifiant, un initiateur radicalaire, avec le reste étant un prépolymère acrylique de poly(méthacrylate de méthyle) et du méthacrylate de méthyle pour la production d'un polymère transparent dans une cuve pour produire un matériau visqueux avec une viscosité de 120-300 cP ;
b. à introduire le matériau visqueux dans un moule ;
c. à permettre à la composition de polymériser dans des conditions contrôlées de sorte que la concentration des flocons augmente à travers l'épaisseur de la feuille dans lequel les conditions contrôlées comprennent une température dans l'intervalle de 45°C à 60°C ;
d. à prélever le matériau polymérisé du moule.

2. Procédé selon la revendication 1, dans lequel le prépolymère comprend 6-20 % en masse de PMMA dans MMA.

3. Procédé selon l'une quelconque des revendications précédentes, dans lequel la composition comprend de plus 0,001-0,1 % en masse de colorant soluble.

4. Procédé selon l'une quelconque des revendications précédentes, dans lequel l'initiateur radicalaire est fourni dans un intervalle de 0,02 %-0,5 % en masse de la composition.

5. Procédé selon l'une quelconque des revendications précédentes, dans lequel dans l'étape a) le mélange se fait sous vide.

6. Procédé selon l'une quelconque des revendications précédentes, dans lequel dans l'étape b) le matériau est introduit dans le moule sous pression, de préférence dans lequel le procédé est un procédé discontinu et la pression est réduite ou éliminée vers la fin de versement d'un lot de matériau.

7. Procédé selon l'une quelconque des revendications précédentes, dans lequel dans l'étape c) la température est d'environ 50°C.

8. Procédé selon la revendication 1 comprenant une étape f) supplémentaire après l'étape c) de durcissement du matériau polymérisé à une température élevée, de préférence dans lequel la température dans l'étape f) se trouve dans l'intervalle de 50°C à 130°C.

9. Procédé selon la revendication 8, dans lequel la période de durcissement dans l'étape f) se trouve dans l'intervalle de 1-10 heures, de préférence de 3-8 heures, encore mieux de 5-7 heures.

10. Procédé selon l'une quelconque des revendications précédentes, dans lequel la polymérisation a lieu à une vitesse appropriée afin de permettre à une couche pratiquement non interrompue de flocons d'être déposée, mais une distribution de flocons reste à des profondeurs différentes dans la feuille de sorte que la première face principale de la feuille présente une apparence d'étincelle et la seconde face principale présente une apparence métallique.

11. Feuille polymère coulée présentant des première et seconde faces principales, la feuille étant formée de polymère transparent ayant 0,5-2 % en masse de flocons métalliques ayant une dimension maximum dans un intervalle de 20-300 µm irrégulièrement distribués dans celle-ci, dans laquelle une concentration des flocons augmente à travers l'épaisseur de la feuille, de sorte que la première face principale de la feuille présente une apparence d'étincelle et la seconde face principale présente une apparence métallique, dans laquelle le polymère est le poly(méthacrylate de méthyle).

12. Procédé selon l'une quelconque des revendications 1 à 10 ou feuille polymère coulée selon la revendication 11, dans lequel les flocons métalliques sont des flocons d'aluminium.

13. Procédé selon l'une quelconque des revendications 1 à 10 ou feuille polymérisée coulée selon l'une quelconque des revendications 11 ou 12 dans lequel le matériau polymérisé ou la feuille présente une épaisseur de 2 mm à 6 mm, de préférence dans lequel le matériau polymérisé ou la feuille présente une épaisseur de 3 mm à 5 mm.
